(19) Europäisches Patentamt
European Patent Office
Office européen des brevets

(11) **EP 3 865 816 B1**

(12) **FASCICULE DE BREVET EUROPEEN**

(45) Date de publication et mention de la délivrance du brevet:
**25.09.2024 Bulletin 2024/39**

(21) Numéro de dépôt: **21157374.6**

(22) Date de dépôt: **16.02.2021**

(51) Classification Internationale des Brevets (IPC):
*G01C 11/00* (2006.01)  *G01C 15/00* (2006.01)
*G01S 5/16* (2006.01)  *G01B 11/00* (2006.01)
*G06T 7/73* (2017.01)  *G01S 13/931* (2020.01)
*G01S 17/74* (2006.01)  *G01S 17/931* (2020.01)
*G01S 13/42* (2006.01)

(52) Classification Coopérative des Brevets (CPC):
**G01C 11/00; G01C 15/00; G01S 13/42;
G01S 13/931; G01S 17/931; G06T 7/74;**
G01S 17/74; G01S 2013/9325

(54) **MÉTHODES ET SYSTÈMES POUR MESURER À DISTANCE L'ORIENTATION ANGULAIRE D'UN VÉHICULE AU SEIN D'UN CONVOI AUTOMOBILE ROUTIER.**

VERFAHREN UND SYSTEME ZUR FERNMESSUNG DER WINKELAUSRICHTUNG EINES FAHRZEUGS INNERHALB EINES KRAFTFAHRZEUGKONVOIS AUF DER STRASSE.

METHODS AND SYSTEMS FOR REMOTELY MEASURING THE ANGULAR ORIENTATION OF A VEHICLE WITHIN A MOTOR VEHICLE ROAD CONVOY.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2020 FR 2001535**

(43) Date de publication de la demande:
**18.08.2021 Bulletin 2021/33**

(73) Titulaire: **Arquus
78000 Versailles (FR)**

(72) Inventeur: **VIELLARD, Jérôme, Thierry
75015 PARIS (FR)**

(74) Mandataire: **Lavoix
62, rue de Bonnel
69448 Lyon Cedex 03 (FR)**

(56) Documents cités:
**EP-A1- 2 381 214    EP-A1- 2 789 739
WO-A1-93/07443    US-A1- 2017 242 095**

**Description**

La présente invention concerne un procédé et un ensemble pour mesurer à distance l'orientation angulaire d'un véhicule automobile dans un convoi automobile routier.

L'invention est plus particulièrement applicable au domaine des véhicules automobiles autonomes, par exemple pour estimer l'orientation d'un véhicule dans un convoi, bien que cet exemple d'application ne soit pas limitatif.

Par exemple, lorsque plusieurs véhicules automobiles circulent les uns derrière les autres, par exemple dans un convoi routier, il est parfois nécessaire pour un véhicule du convoi d'estimer la pose d'un autre véhicule qui le précède ou qui le suit.

Par « pose », on désigne ici une information sur la position relative d'un objet par rapport à un repère de référence, ce repère pouvant être associée à un autre objet. On désigne plus particulièrement une information sur l'orientation de cet objet, par exemple l'angle de cet objet autour d'un axe prédéfini, par exemple un axe vertical.

Cette orientation peut être exprimée de façon absolue par rapport à un repère fixe extérieur, ou de façon relative, par rapport à la position courante dudit autre objet.

En général, l'orientation d'un véhicule qui suit ou qui précède un véhicule d'un convoi, est calculée à partir de multiples mesures de distance fournies par différents capteurs de distance.

Cependant, les calculs utilisés pour estimer cette orientation sont très sensibles à des erreurs entachant les mesures de distance, de sorte que l'orientation ainsi calculée manque souvent de précision.

Il existe donc un besoin pour des méthodes et des systèmes permettant de mesurer de façon plus fiable l'orientation angulaire d'un véhicule automobile dans un convoi automobile routier.

À cet effet, l'invention concerne un procédé tel que défini à la revendication 1.

Des aspects avantageux mais non obligatoires du procédé conforme à l'invention sont spécifiés aux revendications 2 à 9.

L'invention concerne également un ensemble tel que défini à la revendication 10.

Selon un autre aspect, l'invention concerne un procédé tel que décrit auparavant et un ensemble tel que décrit précédemment, dans lequel l'objet est un premier véhicule et dans lequel le dispositif de mesure est associé à un deuxième

L'invention sera mieux comprise et d'autres avantages de celle-ci apparaîtront plus clairement à la lumière de la description qui va suivre d'un mode de réalisation d'un système et d'une méthode pour estimer la pose d'un véhicule dans un convoi, donnée uniquement à titre d'exemple et faite en référence aux dessins annexés, dans lesquels :

[Fig 1] la figure 1 est un diagramme représentant un convoi de véhicules automobiles ;
[Fig 2] la figure 2 représente un objet dont on souhaite déterminer l'orientation, tel qu'un véhicule d'un convoi, cet objet comportant plusieurs mires selon des modes de réalisation de l'invention ;
[Fig 3] la figure 3 est un diagramme fonctionnel simplifié de l'objet de la figure 2, selon un mode de réalisation dans lequel l'objet est un véhicule d'un convoi ;
[Fig 4] la figure 4 est un schéma représentant une première configuration des mires sur ledit objet ;
[Fig 5] la figure 5 est un diagramme montrant la mise en oeuvre du procédé d'estimation de l'orientation d'un objet selon des modes de réalisation ;
[Fig 6] la figure 6 est un schéma représentant une deuxième configuration des mires sur ledit objet.

De façon générale, l'invention permet de déterminer l'orientation angulaire d'un objet, notamment par rapport à un autre objet.

Dans l'exemple qui va suivre, donné à des fins d'illustration, des modes de réalisation de l'invention sont appliqués au cas où l'objet est un véhicule automobile, notamment un véhicule routier, par exemple pour déterminer la position angulaire d'un véhicule appartenant à un convoi par rapport à un autre véhicule du convoi, étant entendu que ces véhicules se suivent au sein du convoi.

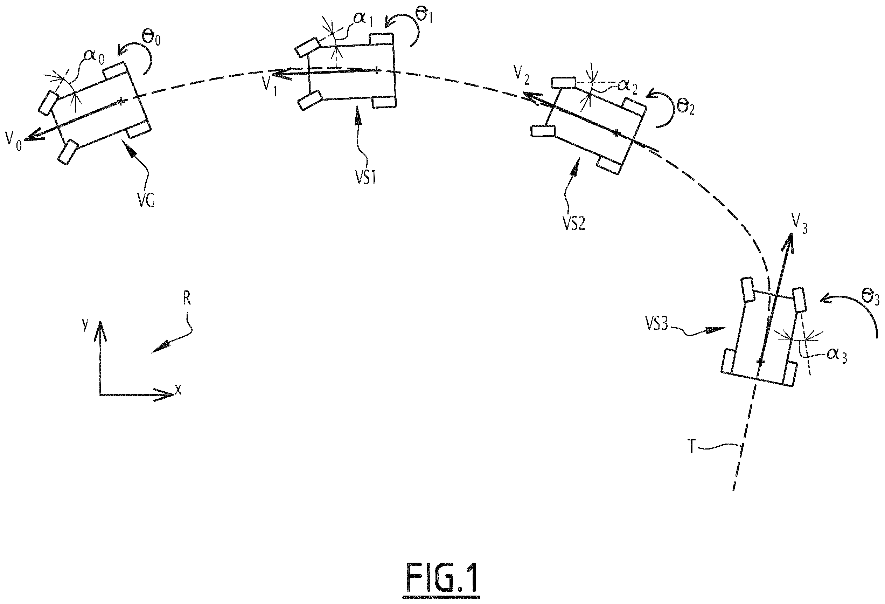

Sur la figure 1 est représenté un ensemble de véhicules routiers, tel qu'un convoi routier, comportant un véhicule guide VG, ici placé en tête du convoi, et une pluralité de véhicules suiveurs, ici notés VS1, VS2 et VS3, qui suivent le véhicule guide VG les uns derrières les autres, par exemple le long d'une même trajectoire T.

Cet exemple n'est toutefois pas limitatif et, en variante, le nombre de véhicules du convoi pourrait être différent, par exemple égal à deux ou supérieur à quatre.

Dans l'exemple illustré, le premier véhicule suiveur VS1 est derrière le véhicule guide VG, le deuxième véhicule suiveur VS2 est derrière le premier véhicule suiveur VS1 et ainsi de suite jusqu'au dernier véhicule suiveur VS3 qui est ici en queue du convoi.

Les véhicules du convoi peuvent être des véhicules à roues, par exemple des voitures ou des camions. Chaque véhicule comporte un train directeur capable d'être braqué pour faire tourner le véhicule lors de son déplacement.

Dans l'exemple illustré, la référence R désigne un repère de coordonnées, qui comporte trois axes orthogonaux x, y et z. Par exemple, les axes x et y sont orientés horizontalement et l'axe z est orienté verticalement.

Un tel repère R peut être défini pour chacun des véhicules.

La position et l'attitude de chaque véhicule du convoi peut être définie au moyen de plusieurs informations de position parmi lesquelles :

- les coordonnées cartésiennes d'un point du véhicule (par exemple le point milieu de l'essieu arrière) ;
- la direction de déplacement du véhicule, notée $V_0$, $V_1$, $V_2$, et $V_3$ pour les véhicules VG, VS1, VS2 et VS3, respectivement ;
- l'angle de braquage des roues du train directeur, notée $\alpha_0$, $\alpha_1$, $\alpha_2$, et $\alpha_3$ sur cette figure seulement pour les véhicules VG, VS1, VS2 et VS3, respectivement ; et
- l'orientation du véhicule, notée $\theta_0$, $\theta_1$, $\theta_2$, et $\theta_3$ pour les véhicules VG, VS1, VS2 et VS3, respectivement.

Par exemple, pour chaque véhicule du convoi, l'orientation $\theta_0$, $\theta_1$, $\theta_2$, et $\theta_3$ est un angle défini autour de l'axe vertical z dans le plan géométrique horizontal formé par les axes x et y d'un repère géométrique R.

Ces informations de position peuvent être exprimées, pour chaque véhicule, dans le repère R d'un autre des véhicules, ou dans un repère R fixe.

Plus précisément, cet angle est défini comme l'angle formé par la direction de déplacement $V_0$, $V_1$, $V_2$, et $V_3$ dudit véhicule par rapport à l'axe x.

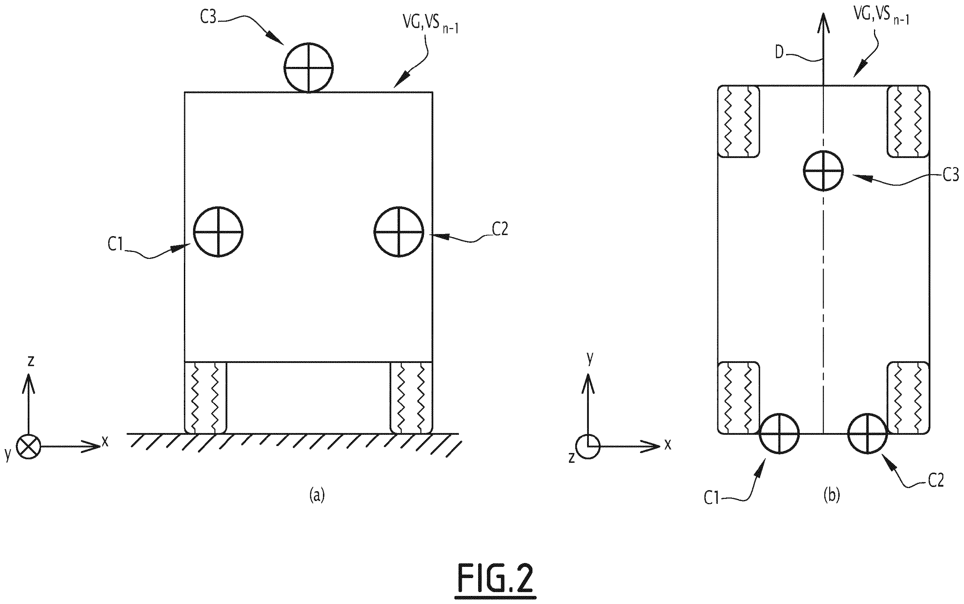

Sur la figure 2 est représenté un des véhicules du convoi, par exemple le véhicule guide VG ou l'un des véhicules suiveurs VS1 à VS3, désigné de façon générique sous la référence $VS_{n-1}$.

Sur l'insert (a) de la figure 2, le véhicule est vu de l'arrière, tandis que sur l'insert (b) de la figure 2 le véhicule est vu du dessus.

Le véhicule comporte plusieurs mires, ou cibles, ici notées C1, C2 et C3.

Cet exemple n'est pas limitatif et, en variante, le nombre de mires C1, C2 et C3 peut être différent, par exemple supérieur ou égal à deux.

Les mires C1, C2 et C3 sont configurées pour être détectées à distance par un dispositif de mesure, tel qu'un radar, ou un lidar, une caméra ou un capteur d'image. Le dispositif de mesure peut comporter un télémètre.

Le dispositif de mesure peut en outre comporter une source de rayonnement électromagnétique, telle qu'un laser ou un émetteur radio, qui émet un rayonnement en direction des mires C1, C2 et C3, afin de pouvoir ensuite mesurer le rayonnement réfléchi par les mires C1, C2 et C3.

Selon un exemple, les mires C1, C2 et C3 comportent un élément et/ou une surface qui réfléchit les rayonnements électromagnétiques, telle que la lumière visible. Selon un exemple, les mires C1, C2 et C3 comportent un motif graphique prédéfini. Selon un autre exemple, les mires C1, C2 et C3 comportent chacune une antenne radio couplée à un circuit électronique de traitement, par exemple une étiquette RFID ou équivalent, dans lequel est stocké un identifiant.

Les mires C1, C2 et C3 sont de préférence disposées de manière à être au moins en partie visibles depuis l'arrière du véhicule et/ou depuis l'avant du véhicule (ou, plus généralement, depuis l'arrière et/ou l'avant de l'objet dont on souhaite déterminer l'orientation), notamment pour être visibles par un observateur ou par un dispositif de détection situé sur un autre véhicule situé devant ou derrière ce véhicule.

De préférence, les mires C1, C2 et C3 sont placées à des positions fixes du véhicule.

Selon des modes de réalisation optionnels mais néanmoins avantageux, les mires C1, C2, C3 peuvent comporter des attributs différents de manière à pouvoir être différenciées ou identifiées individuellement par le dispositif de mesure 10.

Par exemple, selon des modes de réalisation différents, les mires C1, C2 et C3 peuvent différer les unes des autres de par leur taille et/ou leur forme et/ou leur couleur ou le motif affiché et/ou par l'identifiant stocké.

Dans de nombreux modes de réalisation, au moins une des mires C1, C2 et C3 est disposée à l'arrière ou à l'avant du véhicule. De préférence, deux mires sont disposées sur cette face du véhicule. Dans l'exemple illustré, il s'agit des mires C1 et C2.

En pratique, le véhicule peut comporter au moins deux telles mires sur chacune de sa face avant et de sa face arrière, ou sur le toit du véhicule, pour autant que ces mires soient visibles depuis l'arrière ou l'avant du véhicule.

Dans la suite de la description, pour simplifier, seul est décrit en détail le cas où l'on calcule l'orientation d'un véhicule situé devant un véhicule du convoi, mais cet enseignement est transposable au cas où l'on calcule l'orientation d'un autre véhicule situé derrière un véhicule du convoi.

Dans de nombreux modes de réalisation, au moins une des mires C1, C2 et C3 est disposée sur un plan médian du deuxième véhicule, et de préférence en étant décalée longitudinalement par rapport aux autres mires.

Par exemple, cette mire est décalée longitudinalement vers l'avant par rapport à des mires placées à l'arrière du véhicule, ou est décalée longitudinalement vers l'arrière par rapport à des mires placées à l'avant du véhicule.

Dans l'exemple illustré, l'avant et l'arrière du véhicule sont définis par rapport à la direction de déplacement normal du véhicule, ici matérialisée par la flèche D qui, dans cet exemple, est orientée parallèlement à l'axe des ordonnées y du repère R. Le plan médian du véhicule s'étend verticalement et longitudinalement d'avant en arrière du véhicule. Il est illustré ici par un trait pointillé.

Par exemple, la ou les mires disposées à l'avant ou à l'arrière du véhicule sont peintes ou montées sur une face avant ou arrière dudit véhicule, ou sur le toit du véhicule mais tout en étant disposées de manière à être visibles depuis l'arrière ou l'avant, le cas échéant. La ou les mires qui sont disposées en avant sont montées sur le toit du véhicule.

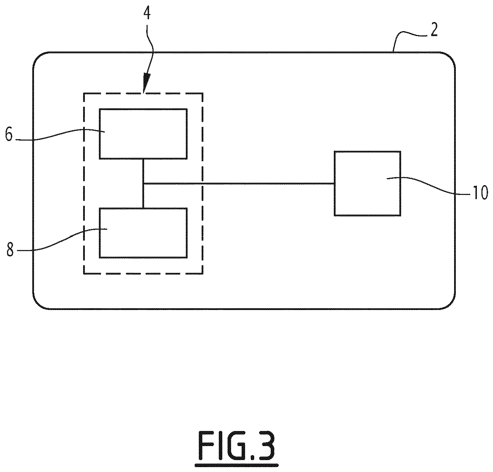

Sur la figure 3 est représenté schématiquement et de façon générique un véhicule automobile 2 correspondant à l'un quelconque des véhicules VG, VS1, VS2, VS3, VS4 du convoi précédemment décrits.

Le véhicule 2 comporte une unité de traitement électronique 4 pourvue d'un processeur 6 et d'une mémoire 8.

Le véhicule 2 comporte également un dispositif de mesure 10 tel que décrit précédemment pour acquérir des informations de position d'au moins une partie des cibles C1, C2 et C3 d'un autre véhicule situé devant et/ou derrière le véhicule 2.

L'unité de traitement électronique 4 est couplée au dispositif de mesure 10 et est configurée pour traiter les données en provenance du dispositif de mesure 10.

Par exemple, le processeur 6 est un microcontrôleur programmable ou un microprocesseur.

Selon des exemples, la mémoire 8 est une mémoire ROM (« read-only memory » en anglais), ou une mémoire vive RAM (« random access memory »), ou d'autres formes de mémoire, telle qu'une mémoire non volatile EEPROM (« erasable electrically programmable read-only memory »), ou une mémoire flash, ou une mémoire optique, ou une mémoire magnétique, ou tout équivalent ou combinaison possible de ces mémoires.

La mémoire 8 forme de préférence un support d'enregistrement de données lisible par ordinateur.

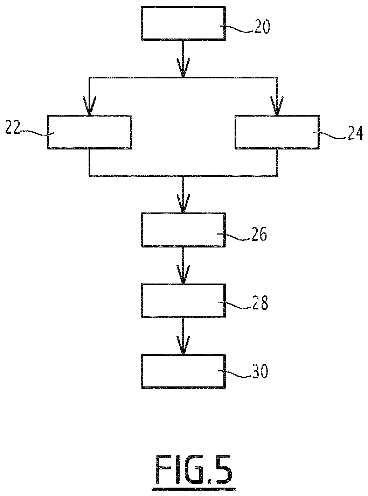

La mémoire 8 contient des instructions exécutables et/ou un code logiciel configurées pour mettre en oeuvre un procédé d'estimation de l'orientation d'un véhicule, par exemple le procédé décrit à la figure 5, lorsque ces instructions sont exécutées par le processeur 6.

En variante, l'unité de traitement 4 comporte un ou plusieurs composants logiques programmables de type FPGA (« field programmable gate array ») ou un circuit intégré dédié configuré pour mettre en oeuvre ledit procédé.

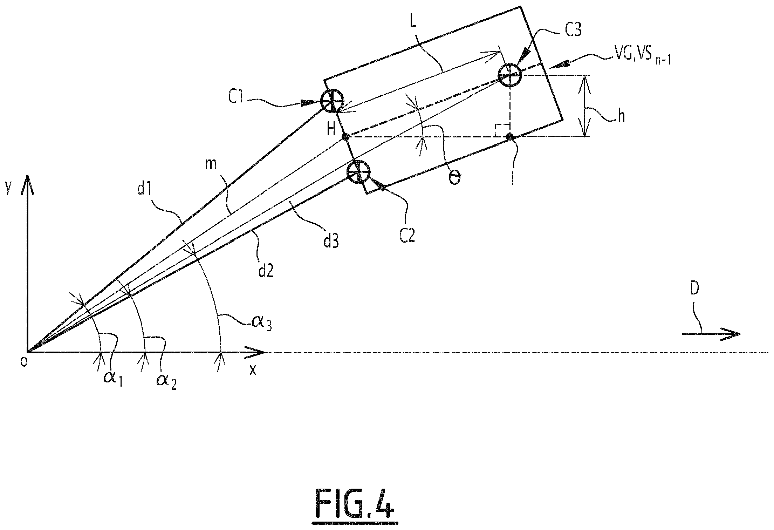

Sur la figure 4 est représenté un exemple de mesure de la position relative des mires selon un mode de réalisation.

Dans cet exemple, le dispositif de mesure 10 est associé à un premier véhicule et est utilisé pour mesurer l'orientation θ d'un deuxième véhicule VG ou $VS_{n-1}$ situé devant le premier véhicule.

Le repère géométrique R illustré est associé à ce premier véhicule, de telle sorte que l'axe des abscisses x est orienté dans la direction de déplacement D du véhicule. Les angles et positions angulaires du deuxième véhicule sont définis et orientés par rapport à cet axe des abscisses x. Les distances entre le premier véhicule et le deuxième véhicule VG ou $VS_{n-1}$ sont exprimées par rapport à l'origine O du repère R. On considère que le dispositif de mesure 10 est placée à ce point d'origine O.

Dans cet exemple, le deuxième véhicule VS, $VG_{n-1}$ comporte deux mires C1 et C2 disposées à l'arrière du véhicule et une troisième mire C3 décalée longitudinalement vers l'avant du véhicule, de préférence dans un plan médian du véhicule, ici matérialisé par un trait pointillé épais.

Sur la figure, le point H désigne un point médian de la face arrière.

Le dispositif de mesure 10 est configuré pour acquérir la position relative d'au moins deux mires C1, C2 ou C3 placées sur le deuxième véhicule précédant ou suivant le premier véhicule, la position relative comportant la distance d1, d2, d3 et la position angulaire $\alpha_1$, $\alpha_2$, $\alpha_3$ de ladite mire par rapport au premier véhicule, et ici par rapport au centre O du repère R associé au premier véhicule.

La mesure de la distance entre chaque mire et le premier véhicule est par exemple réalisée au moyen du télémètre du dispositif de mesure 10.

La mesure de la position angulaire entre chaque mire par rapport au premier véhicule est par exemple réalisée en acquérant une image ou un cliché radar ou lidar avec le dispositif de mesure 10, puis en identifiant automatiquement les positions respectives des mires sur la ou les images acquises pour ensuite calculer automatiquement leur position angulaire.

Ce calcul peut être réalisé par l'unité de traitement 4 ou par un processeur ou par un circuit de traitement du signal associé au dispositif de mesure 10.

Dans de nombreux modes de réalisation, l'unité de traitement 4 est configurée pour calculer la distance entre le premier véhicule et le deuxième véhicule à partir des données de position mesurées et d'une connaissance préalable de la position relative des mires sur le deuxième véhicule.

Cette distance, identifiée par la référence « m », est, par exemple, définie comme égale à la distance entre le point H et l'origine O du repère.

Par exemple, la distance m est calculée au moyen de la formule suivante :

$$m = \frac{\sqrt{2(d_1^2 + d_2^2) - l^2}}{2}$$

où « d1 » est la distance mesurée entre la première mire C1 et le dispositif de mesure du premier véhicule, « d2 » est la distance mesurée entre la deuxième mire C2 et le dispositif de mesure du premier véhicule, et « l » est la distance entre les première et deuxième mires.

Dans de nombreux modes de réalisation, l'unité de traitement 4 est programmée pour calculer l'orientation θ du deuxième véhicule à partir des données de position relative mesurées et d'une connaissance préalable de la position relative des cibles sur le deuxième véhicule.

Par exemple, l'orientation θ du deuxième véhicule est calculée au moyen de la formule suivante :

$$\theta = \sin^{-1}\left(\frac{2d_3 \sin \alpha_3 - d_1 \sin \alpha_1 - d_2 \sin \alpha_2}{2}\right)$$

où « d1 » est la distance mesurée entre la première mire C1 et le dispositif de mesure 10 du premier véhicule, « d2 » est la distance mesurée entre la deuxième mire C2 et le dispositif de mesure 10, « d3 » est la distance mesurée entre la troisième mire C3 et le dispositif de mesure 10, « $\alpha_1$ » est la position angulaire de la première mire C1, « $\alpha_2$ » est la position angulaire de la deuxième mire C2 et « $\alpha_3$ » est la position angulaire de la troisième mire C3.

Sur la figure 5 est illustré un exemple de mise en oeuvre d'un procédé pour estimer l'orientation d'un des véhicules du convoi de la figure 1.

Le procédé débute à l'étape 20.

A l'étape 22, le dispositif 10 mesure la distance qui le sépare de chacune des mires C1, C2, C3.

A l'étape 24, qui peut être mise en oeuvre en même temps que l'étape 22, le dispositif 10 mesure la position angulaire de chacune des mires C1, C2 et C3.

A l'étape 26, l'unité de traitement 4 calcule automatiquement la distance m entre le véhicule et le point de référence O à partir des données de position relative mesurée, par exemple comme décrit précédemment.

A l'étape 28, l'unité de traitement 4 calcule automatiquement l'orientation θ du véhicule à partir des données de position relative mesurées et d'une connaissance préalable de la position relative des cibles sur le deuxième véhicule, cette connaissance préalable pouvant être une connaissance de la distance L entre deux mires ou plus, comme décrit précédemment.

A l'étape 30, le procédé prend fin. A ce stade, l'unité de traitement 4 peut optionnellement combiner la distance m calculée avec l'orientation θ calculée, par exemple pour ensuite envoyer ces informations de position relative à un système de gestion du convoi, ou à un système de pilotage automatique.

Les étapes décrites ci-dessus peuvent toutefois être répétées, en totalité ou pour seulement une partie d'entre elles, par exemple de façon cyclique ou périodique, afin de mesurer régulièrement l'orientation de cet autre véhicule, par exemple tout au long du déplacement du véhicule.

L'exemple décrit ci-dessus est donné à titre d'illustration et n'est pas nécessairement limitatif. En variante, l'ordre des étapes pourrait être différent et certaines étapes pourraient être omises ou implémentées différemment.

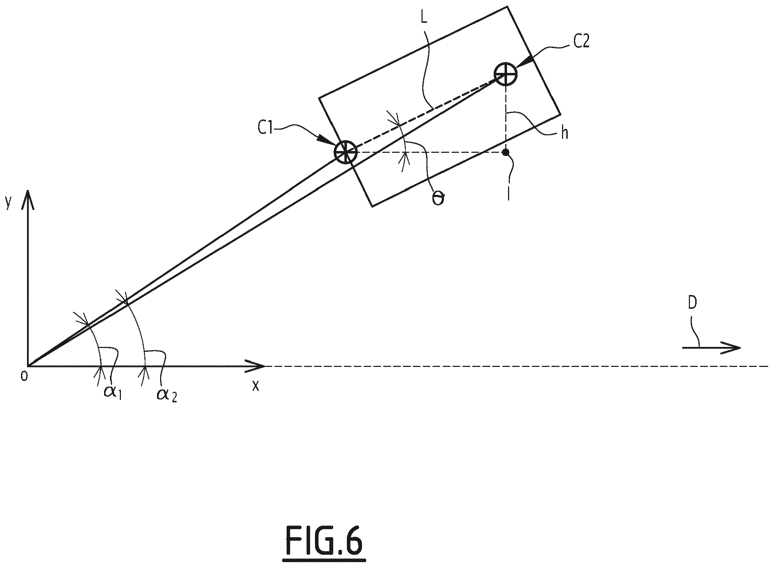

Sur la figure 6 est représenté un autre mode de réalisation dans lequel les mires présentent une configuration différente.

Notamment, le véhicule comporte deux mires : une première mire C1 placée à l'arrière du deuxième véhicule et une deuxième mire C2 placée à l'arrière du deuxième véhicule, sur un plan médian de ce véhicule.

Dans l'exemple illustré, les mires C1 et C2 sont alignées, mais cet exemple n'est pas limitatif et la première mire C1 pourrait être décalée latéralement.

Sur la figure 6, la distance « L » désigne la distance entre les première et deuxième mires C1 et C2. La distance « h » désigne la distance entre les projections orthogonales des première et deuxième mires C1 et C2 sur un axe parallèle à l'axe des ordonnées y.

Par exemple, l'orientation θ du deuxième véhicule est calculée au moyen de la formule suivante :

$$\theta = \sin^{-1}(d_2 \sin \alpha_2 - d_1 \sin \alpha_1)$$

où « d1 » est la distance mesurée entre la première mire C1 et le dispositif de mesure 10 du premier véhicule, « d2 » est la distance mesurée entre la deuxième mire C2 et le dispositif de mesure du premier véhicule, « $\alpha_1$ » est la position angulaire de la première mire C1 et « $\alpha_2$ » est la position angulaire de la deuxième mire C2, ces positions angulaires étant ici définies par rapport à l'axe des abscisses x du repère R.

Mis à part ces différences, tout ce qui a été décrit en référence aux modes de réalisation précédents peut être transposé à ce mode de réalisation.

**Revendications**

1. Procédé pour estimer une orientation d'un premier véhicule automobile dans un convoi automobile routier par rapport à un deuxième véhicule du convoi, le premier véhicule et le deuxième véhicule se suivant au sein du convoi, le procédé étant **caractérisé en ce qu'**il comporte des étapes consistant à :

   - par un dispositif de mesure (10), acquérir la position relative d'au moins deux mires (C1, C2, C3) placées sur le premier véhicule du convoi, la position relative comportant la distance (d1, d2, d3) et la position angulaire ($\alpha_1$, $\alpha_2$, $\alpha_3$) de ladite mire par rapport au dispositif de mesure, le dispositif de mesure étant associé au deuxième véhicule du convoi ;
   - par une unité de traitement (4), calculer l'orientation ($\theta$) du premier véhicule à partir des données de position relative mesurées et d'une connaissance préalable de la position relative des mires sur le premier véhicule.

2. Procédé selon la revendication 1, lequel comporte en outre le calcul, par l'unité de traitement, de la distance (m) entre le premier véhicule et le dispositif de mesure à partir des données de position mesurées et d'une connaissance préalable de la position relative des mires sur le premier véhicule.

3. Procédé selon la revendication 2, dans lequel ladite distance est calculée au moyen de la formule suivante :

$$m = \frac{\sqrt{2(d_1^2 + d_2^2) - l^2}}{2}$$

   où « d1 » est la distance mesurée entre une première mire (C1) du premier véhicule et le dispositif de mesure, « d2 » est la distance mesurée entre une deuxième mire (C2) de l'objet et le dispositif de mesure, et « l » est la distance entre les première et deuxième mires.

4. Procédé selon l'une quelconque des revendications précédentes, dans lequel une première mire (C1) est placée sur le premier véhicule, dans lequel une deuxième mire (C2) du premier véhicule est placée sur un plan médian du premier véhicule en étant décalée longitudinalement par rapport à la première mire, et dans lequel l'orientation ($\theta$) du premier véhicule est calculée au moyen de la formule suivante :

$$\theta = \sin^{-1}(d_2 \sin \alpha_2 - d_1 \sin \alpha_1)$$

   où « d1 » est la distance mesurée entre la première mire du premier véhicule et le dispositif de mesure, « d2 » est la distance mesurée entre la deuxième mire du premier véhicule et le dispositif de mesure, « $\alpha_1$ » est la position angulaire de la première mire et « $\alpha_2$ » est la position angulaire de la deuxième mire.

5. Procédé selon l'une quelconque des revendications 1 à 3, dans lequel le premier véhicule comporte trois mires (C1, C2, C3) et dans lequel l'orientation ($\theta$) du premier véhicule est calculée en fonction des données de position relative mesurées pour ces trois mires.

6. Procédé selon la revendication 5, dans lequel l'orientation ($\theta$) du premier véhicule est calculée au moyen de la formule suivante :

$$\theta = \sin^{-1}\left(\frac{2d_3 \sin \alpha_3 - d_1 \sin \alpha_1 - d_2 \sin \alpha_2}{2}\right)$$

   où « d1 » est la distance mesurée entre une première mire du premier véhicule et le dispositif de mesure, « d2 » est la distance mesurée entre une deuxième mire du premier véhicule et le dispositif de mesure, « d3 » est la distance mesurée entre une troisième mire du premier véhicule et le dispositif de mesure, « $\alpha_1$ » est la position angulaire de la première mire, « $\alpha_2$ » est la position angulaire de la deuxième mire et « $\alpha_3$ » est la position angulaire de la troisième mire.

**7.** Procédé selon l'une quelconque des revendications précédentes, dans lequel les mires (C1, C2, C3) comportent des attributs différents de manière à pouvoir être différenciées ou identifiées individuellement par le dispositif de mesure (10).

**8.** Procédé selon l'une quelconque des revendications précédentes, dans lequel le dispositif de mesure (10) comporte un radar, ou un lidar, ou une caméra ou un capteur d'image.

**9.** Procédé selon l'une quelconque des revendications précédentes, dans lequel le dispositif de mesure (10) comporte un télémètre.

**10.** Ensemble (2), comportant un dispositif de mesure (10) et une unité de traitement (4), le dispositif de mesure étant configuré pour acquérir la position relative d'au moins deux mires (C1, C2, C3) placées sur un premier véhicule dans un convoi automobile routier, la position relative comportant la distance (d1, d2, d3) et la position angulaire ($\alpha_1$, $\alpha_2$, $\alpha_3$) de ladite mire par rapport au dispositif de mesure, le dispositif de mesure étant associé à un deuxième véhicule du convoi, le premier véhicule et le deuxième véhicule se suivant au sein du convoi, l'unité de traitement étant configurée pour calculer l'orientation ($\theta$) du premier véhicule par rapport au deuxième véhicule à partir des données de position relative mesurées et d'une connaissance préalable de la position relative des mires sur le premier véhicule.

**Patentansprüche**

**1.** Verfahren zum Schätzen einer Ausrichtung eines ersten Kraftfahrzeugs in einem Straßenkraftfahrzeugkonvoi in Bezug auf ein zweites Fahrzeug des Konvois, wobei das erste Fahrzeug und das zweite Fahrzeug innerhalb des Konvois aufeinander folgen, wobei das Verfahren **dadurch gekennzeichnet ist, dass** Schritte umfasst, die aus Folgendem bestehen:

- durch eine Messvorrichtung (10), Erfassen der relativen Position von mindestens zwei Messlatten (C1, C2, C3), die an dem ersten Fahrzeug des Konvois angebracht sind, die relative Position umfassend den Abstand (d1, d2, d3) und die Winkelposition ($\alpha_1$, $\alpha_2$, $\alpha_3$) der Messlatte in Bezug auf die Messvorrichtung, wobei die Messvorrichtung mit dem zweiten Fahrzeug des Konvois assoziiert ist;
- durch eine Verarbeitungseinheit (4), berechnen der Ausrichtung ($\theta$) des ersten Fahrzeugs anhand der gemessenen relativen Positionsdaten und einer Vorkenntnis der relativen Position der Messlatten an dem ersten Fahrzeug.

**2.** Verfahren nach Anspruch 1, das ferner das Berechnen des Abstands (m) zwischen dem ersten Fahrzeug und der Messvorrichtung durch die Verarbeitungseinheit anhand der gemessenen Positionsdaten und einer Vorkenntnis der relativen Position der Messlatten an dem ersten Fahrzeug umfasst.

**3.** Verfahren nach Anspruch 2, wobei der Abstand mittels der folgenden Formel berechnet wird:

$$m = \frac{\sqrt{2(d_1^2 + d_2^2) - l^2}}{2}$$

wobei "d1" der gemessene Abstand zwischen einer ersten Messlatte (C1) des ersten Fahrzeugs und der Messvorrichtung ist, "d2" der gemessene Abstand zwischen einer zweiten Messlatte (C2) des Objekts und der Messvorrichtung ist, und "l" der Abstand zwischen der ersten und der zweiten Messlatte ist.

**4.** Verfahren nach einem der vorherig

en Ansprüche, wobei eine erste Messlatte (C1) an dem ersten Fahrzeug platziert wird, wobei dem eine zweite Messlatte (C2) des ersten Fahrzeugs an einer Mittelebene des ersten Fahrzeugs platziert wird, indem es in Längsrichtung gegenüber der ersten Messlatte versetzt ist, und wobei die Ausrichtung ($\theta$) des ersten Fahrzeugs mittels der folgenden Formel berechnet wird:

$$\theta = \sin^{-1}(d_2 \sin \alpha_2 - d_1 \sin \alpha_1)$$

wobei "d1" der gemessene Abstand zwischen der ersten Messlatte des ersten Fahrzeugs und der Messvorrichtung ist, "d2" der gemessene Abstand zwischen der zweiten Messlatte des ersten Fahrzeugs und der Messvorrichtung ist, "$\alpha_1$" die Winkelposition der ersten Messlatte ist und "$\alpha_2$" die Winkelposition der zweiten Messlatte ist.

5. Verfahren nach einem der Ansprüche 1 bis 3, wobei das erste Fahrzeug drei Messlatten (C1, C2, C3) aufweist und wobei die Ausrichtung ($\theta$) des ersten Fahrzeugs basierend auf den relativen Positionsdaten berechnet wird, die für diese drei Messlatten gemessen werden.

6. Verfahren nach Anspruch 5, wobei die Ausrichtung ($\theta$) des ersten Fahrzeugs mittels der folgenden Formel berechnet wird:

$$\theta = \sin^{-1}\left(\frac{2d_3 \sin \alpha_3 - d_1 \sin \alpha_1 - d_2 \sin \alpha_2}{2}\right)$$

wobei "d1" der gemessene Abstand zwischen einer ersten Messlatte des ersten Fahrzeugs und der Messvorrichtung ist, "d2" der gemessene Abstand zwischen einer zweiten Messlatte des ersten Fahrzeugs und der Messvorrichtung ist, "d3" der gemessene Abstand zwischen einer dritten Messlatte des ersten Fahrzeugs und der Messvorrichtung ist, "$\alpha_1$" die Winkelposition der ersten Messlatte ist, "$\alpha_2$" die Winkelposition der zweiten Messlatte ist und "$\alpha_3$" die Winkelposition der dritten Messlatte ist.

7. Verfahren nach einem der vorherigen Ansprüche, wobei die Testbilder (C1, C2, C3) unterschiedliche Attribute umfassen, sodass sie von der Messvorrichtung (10) individuell unterschieden oder identifiziert werden können.

8. Verfahren nach einem der vorherigen Ansprüche, wobei die Messvorrichtung (10) ein Radar oder ein Lidar oder eine Kamera oder einen Bildsensor umfasst.

9. Verfahren nach einem der vorherigen Ansprüche, wobei die Messvorrichtung (10) einen Entfernungsmesser umfasst.

10. Anordnung (2), umfassend eine Messvorrichtung (10) und eine Verarbeitungseinheit (4) umfasst, wobei die Messvorrichtung konfiguriert ist, um die relative Position von mindestens zwei Messlatten (C1, C2, C3) zu erfassen, die an einem ersten Fahrzeug in einem Straßenkraftfahrzeugkonvoi platziert sind, die relative Position umfassend den Abstand (d1, d2, d3) und die Winkelposition($\alpha_1$, $\alpha_2$, $\alpha_3$) des Testbilds in Bezug auf die Messvorrichtung, wobei die Messvorrichtung mit einem zweiten Fahrzeug des Konvois assoziiert ist, wobei das erste Fahrzeug und das zweite Fahrzeug innerhalb des Konvois aufeinander folgen, wobei die Verarbeitungseinheit konfiguriert ist, um die Ausrichtung ($\theta$) des ersten Fahrzeugs in Bezug auf das zweite Fahrzeug anhand der gemessenen relativen Positionsdaten und einer Vorkenntnis der relativen Position der Messlatten an dem ersten Fahrzeug zu berechnen.

**Claims**

1. A method for estimating an orientation of a first motor vehicle in a road motor vehicle convoy relative to a second vehicle in the convoy, the first vehicle and the second vehicle following each other within the convoy, the method being **characterised in that** it comprises steps consisting of:

- with a measuring device (10), acquire the relative position of at least two test patterns (C1, C2, C3) placed on the first vehicle of the convoy, the relative position comprising the distance (d1, d2, d3) and the angular position ($\alpha_1$, $\alpha_2$, $\alpha_3$) of said sight with respect to the measuring device, the measuring device being associated with the second vehicle of the convoy;
- a processing unit (4) calculates the orientation ($\theta$) of the first vehicle on the basis of the measured relative position data and prior knowledge of the relative position of the test patterns on the first vehicle.

2. A method as claimed in claim 1, which further comprises the processing unit calculating the distance (m) between the first vehicle and the measuring device on the basis of the measured position data and prior knowledge of the relative position of the test patterns on the first vehicle.

3. A method according to claim 2, wherein said distance is calculated using the following formula:

$$m = \frac{\sqrt{2(d_1^2 + d_2^2) - l^2}}{2}$$

where "d1" is the distance measured between a first test pattern (C1) of the first vehicle and the measuring device, "d2" is the distance measured between a second test pattern (C2) of the object and the measuring device, and "l" is the distance between the first and second test patterns.

4. A method according to any one of the preceding claims, in which a first test pattern (C1) is placed on the first vehicle, in which a second test pattern (C2) of the first vehicle is placed on a median plane of the first vehicle and longitudinally offset from the first sight, and wherein the orientation ($\theta$) of the first vehicle is calculated using the following formula:

$$\theta = \sin^{-1}(d_2 \sin \alpha_2 - d_1 \sin \alpha_1)$$

where "d1" is the distance measured between the first test pattern of the first vehicle and the measuring device, "d2" is the distance measured between the second test pattern of the first vehicle and the measuring device, "$\alpha_1$" is the angular position of the first test pattern and "$\alpha_2$" is the angular position of the second test pattern.

5. A method according to any one of claims 1 to 3, in which the first vehicle comprises three test patterns (C1, C2, C3) and in which the orientation ($\theta$) of the first vehicle is calculated as a function of the relative position data measured for these three test patterns.

6. A method according to claim 5, wherein the orientation ($\theta$) of the first vehicle is calculated using the following formula:

$$\theta = \sin^{-1}\left(\frac{2d_3 \sin \alpha_3 - d_1 \sin \alpha_1 - d_2 \sin \alpha_2}{2}\right)$$

where "d1" is the distance measured between a first test pattern of the first vehicle and the measuring device, "d2" is the distance measured between a second test pattern of the first vehicle and the measuring device, "d3" is the distance measured between a third test pattern of the first vehicle and the measuring device., "$\alpha_1$" is the angular position of the first test pattern, "$\alpha_2$" is the angular position of the second sight and "$\alpha_3$" is the angular position of the third sight.

7. A method according to any one of the preceding claims, in which the test patterns (C1, C2, C3) have different attributes so that they can be differentiated or identified individually by the measuring device (10).

8. A method according to any of the preceding claims, in which the measuring device (10) comprises a radar, or a lidar, or a camera or an image sensor.

9. A method according to any one of the preceding claims, in which the measuring device (10) comprises a telemeter.

10. An assembly (2), comprising a measuring device (10) and a processing unit (4), the measuring device being configured to acquire the relative position of at least two test patterns (C1, C2, C3) placed on a first vehicle in a road vehicle convoy, the relative position comprising the distance (d1, d2, d3) and the angular position ($\alpha_1$, $\alpha_2$, $\alpha_3$) of the said test pattern relative to the measuring device, the measuring device being associated with a second vehicle of the convoy, the first vehicle and the second vehicle following one another within the convoy, the processing unit being configured to calculate the orientation ($\theta$) of the first vehicle relative to the second vehicle from the measured relative position data and from prior knowledge of the relative position of the test patterns on the first vehicle.

## FIG.1

EP 3 865 816 B1

(a)

(b)

## FIG.2

**FIG.3**

FIG.4

## FIG.5

EP 3 865 816 B1

FIG.6